# EUROPEAN PATENT APPLICATION

(11) **EP 3 147 838 A1**
(43) Date of publication of application: **29.03.2017**
(21) Application number: 15306479.5
(22) Date of filing: 23.09.2015
(51) Int. Cl.: G06Q 10/08

(54) **PARCEL PACKAGING METHOD AND DEVICE**

(71) Applicant: NEOPOST TECHNOLOGIES, 92220 Bagneux (FR)
(72) Inventor: AZE, Gérard, 92000 Nanterre (FR); DE BOER, Fokke, 9212 RG Boornbergum (NL)
(74) Representative: David, Alain

(57) **Abstract**

A method for packaging articles in a packaging device (10) including the steps of: determining in a control unit (100) inner box dimensions of a packaging box from overall dimensions of an article or group of articles to be shipped (14), preparing a packaging box blank satisfying said inner box dimensions, forming from said packaging box blank said packaging box around the article or group of articles, determining outer box dimensions of a resulting parcel (22) from said packaging box blank, assigning a unique identifier to the resulting parcel, tying said outer box dimensions of the resulting parcel to said unique identifier and recording said unique identifier and outer box dimensions in a database (26) that can be looked-up by various parties involved in the distribution of said resulting parcel.

## Description

The present invention relates to a parcel packaging method and device for recording parcel information such as size, weight and inner content, and makes them available in a database, in order to determine the correct shipping rate and eventually for other verification purposes.

### Prior art

Shipping rates depend on various parameters such as service level, delivery address and notably size and weight (commonly referred to as dimensional information). Carriers and Posts have defined rate tables associating the dimensions of parcels with the corresponding tariffs. Therefore it is necessary to measure these dimensions in order to apply the correct rate.

Depending on the setup of logistic operations, the carrier may not be selected when the shipment is prepared. The parcel may also be handled by several parties, both public and private, throughout its lifecycle. Each party must be able to identify and trace the parcel so that reference can be made to associated information (not limited to dimensions). The associated information is typically held in a database where it can be accessed using EDI exchange or another appropriate access protocol, e.g. a directory access protocol.

Accessing the dimensions of a parcel may be useful, not only to determine the shipping rate, but also to check that the right parcel is delivered, for instance by weighing or measuring it at a later stage of the distribution process. After reading the unique identifier of the parcel, a lookup can be made in the database to access the dimensions previously recorded. This helps ensuring that no error or substitution has occurred during the distribution process. For instance, EP2891433 describes a method where the dimensions, and then the weight of a parcel are verified when it is deposited in a secure locker. Additionally, it might be desirable to check the content of a parcel, either at the beginning of the process to prove that the right items have been packaged, or at subsequent steps of the delivery process for ensuring the integrity of the parcel. This might be required for cross-border/overseas shipments.

Once the information has been captured, it is desirable to attach it to the parcel. This can be achieved by tying the information to an identifier which is already affixed to the parcel - such as a barcode defined by ISO/IEC 15459 - or by printing a label which is subsequently affixed to the parcel and bears an identifier. Part of the information may then be printed directly on the label in clear text or embedded in a separate barcode.

Several systems exist to acquire the dimensions of a parcel. The simplest ones require measuring length, width and height with a ruler and reporting them on a packing slip or more conveniently in a computerized shipping system. High accuracy is not necessary; typically +/- 5 mm is enough. This process is however time consuming and error prone.

Other systems are more sophisticated and more automated. For instance, US7137556 discloses an intra-facility system for capturing, storing, and accessing object information. The system comprises one or more object information capture systems, a server for storing and accessing the object information, and one or more user terminals for requesting specific object information from the server. The captured information includes object dimension information, object identification information, and object image information. Examples are given of sensing and/or imaging technologies that are used to acquire object dimensions, identification, and image information. Such systems make use of sophisticated sensing and/or imaging technologies as well as complex mathematical methods to acquire identification and dimension information of the parcels, moreover as the desired throughput is high.

Automated packaging systems have been recently introduced, where the parcel is created around the items to be shipped, either to protect them or to assemble them in a single shipment. Such systems are especially useful in e-fulfilment centres that ship a wide range and combination of articles. This process resulting in parcels of highly variable size and weight is disclosed for example in WO2014/117817 which describes a method and system for automatically forming a packaging box and packaging at least one article therein simultaneously with the formation of said box. Four folding units fold side and end panels of a blank upwardly. The folding units comprise a front pair and a rear pair positioned at a longitudinal distance in conveying direction. The two folding units of each pair are positioned at a transverse distance respective from each other. Said longitudinal and transversal distances are adjustable during feeding of the blank into the supporting station. The system can also package a group of articles to be shipped together.

In an embodiment of this method a step of measuring the overall length, width and height dimensions of said at least one article is included, during conveying of said at least one article by the input conveyor. In this manner the time needed to automatically form packaging boxes can be decreased leading to a larger operating capacity. In alternative embodiments the overall dimensions can be provided via automatic identification of the article(s) through for example barcode scanning, RFID detection, image recognition and/or looking up the dimensions in databases or even by operator input, e.g. when handling many small batches of equally sized articles. In the system a measurement device is included for measuring the dimensions and optionally the weight of the article(s) to be packaged and for providing data indicative for the dimensions and optionally weight to the control unit.

The system can comprise further devices, preferably controlled by the control unit, such as for instance a device for supplying filling material to fill up possible empty spaces inside the box; an address printer for printing addresses directly onto the box or on an address sticker, which is adhered to the box by means of a sticker module; a scale for weighing the complete box including the articles and a franking unit.

Although the system of WO2014/117817 includes a measurement device for measuring the dimensions of the article(s) to be packaged before forming the packaging box, there is no measure of the complete parcel to be shipped, which size may deviate more than expected in any direction from the measured dimensions of the article(s) to be packaged , e.g. due to specific limitations of the packaging system and packaging material used. However, this information may be required for applying the correct shipping rate of for verification purposes downstream in the distribution process. Although image recognition may be used to measure the dimensions of the article(s) to be packaged, no image of the inner content of the parcel is recorded.

### Object of the invention

It is an object of the invention to provide a method and device for determining the dimensions, and optionally the weight, of a parcel and recording them into a computer at a high throughput and without requiring an additional dimensioning system. It is another aspect of the invention to record an image of the inner content of the parcel. It is another object of the invention to tie this information to a printed identifier which is affixed to the parcel. It is a further aspect of this invention to make this information available in a database that can be looked-up by the various parties involved in the distribution of the parcel.

### Summary of the invention

These objects are achieved by a method and system performing the steps of: determining in a control unit inner box dimensions of a packaging box from overall dimensions of an article or group of articles to be shipped, preparing a packaging box blank satisfying said inner box dimensions, forming from said packaging box blank said packaging box around the article or group of articles, determining outer box dimensions of the resulting parcel from said packaging box blank, assigning a unique identifier to the resulting parcel, tying said outer box dimensions of the resulting parcel to said unique identifier and recording said unique identifier and outer box dimensions in a database that can be looked-up by various parties involved in the distribution of said resulting parcel.

Preferably, said overall dimensions are determined with a measuring device and said packaging box blank is further based on predetermined properties of customer orders, among others shipping destination, weight, fragility or shipping conditions of the article(s) to be shipped.

According to one embodiment, said outer box dimensions are determined from said inner box dimensions by the following formula:
- Lob = Lib + 3*CW
- Wob = Wib + 4*CW
- Hob = Hib + 2*CW

with Lib, Wib and Hib the inner box dimensions,
Lob, Wob and Hob the outer box dimensions, and
CW the thickness of the packaging box blank.

According to another embodiment, said outer box dimensions are determined from said inner box dimensions by the following formula:
- Lob = Lib + 3*CW
- Wob = Wib + 6*CW
- Hob = Hib + 2*CW

with Lib, Wib and Hib the inner box dimensions,
Lob, Wob and Hob the outer box dimensions, and
CW the thickness of the packaging box blank.

According to one another embodiment, said outer box dimensions are determined from said inner box dimensions by the following formula:
- Lob = Lib + 3*CW
- Wob = Wib + 8*CW
- Hob = Hib + 2*CW

with Lib, Wib and Hib the inner box dimensions,
Lob, Wob and Hob the outer box dimensions, and
CW the thickness of the packaging box blank.

It is another aspect of the invention to capture with an imaging device an image of the article(s) to be shipped before forming the packaging box, and to record this image in the database along with the unique identifier and outer box dimensions.

It is another aspect of the invention to include the step of measuring with a weighing scale the weight of said resulting parcel or calculating with the control unit the weight of said resulting parcel based on articles content and packaging materials used to form and fill the packaging box.

It is another aspect of the invention to include the step of comparing said measured weight with said calculated weight or a predetermined weight based on customer order for verifying that all articles forming said group of articles are included in the resulting parcel.

It is another aspect of the invention to include the step of printing with an in-line printer or an off-line printer the unique identifier and the dimensional information directly onto the parcel or on a label which is subsequently affixed to the resulting parcel.

### Brief description of the drawings

The invention will be described and explained with additional specificity and detail through the use of the accompanying drawings in which:
Fig. 1 is a general view of a logistic system showing various steps of the distribution process and the interactions between the parties;
Figure 2 shows a developed view of a packaging box blank used in the process of figure 1,
Fig. 3 is a schematic view of a device for packaging articles according to the invention,
Fig. 4 is a flowchart showing the main steps of the method of the invention,
Figs. 5A shows a group of articles to be shipped together with their overall measured dimensions,
Figures 5B to 5D show various views of an exemplary packaging box at various stages of folding,
Fig. 6 shows another type of packaging box according to the invention, and
Fig. 7 is an example of label that can be affixed to a parcel.

### Detailed description of exemplary embodiments

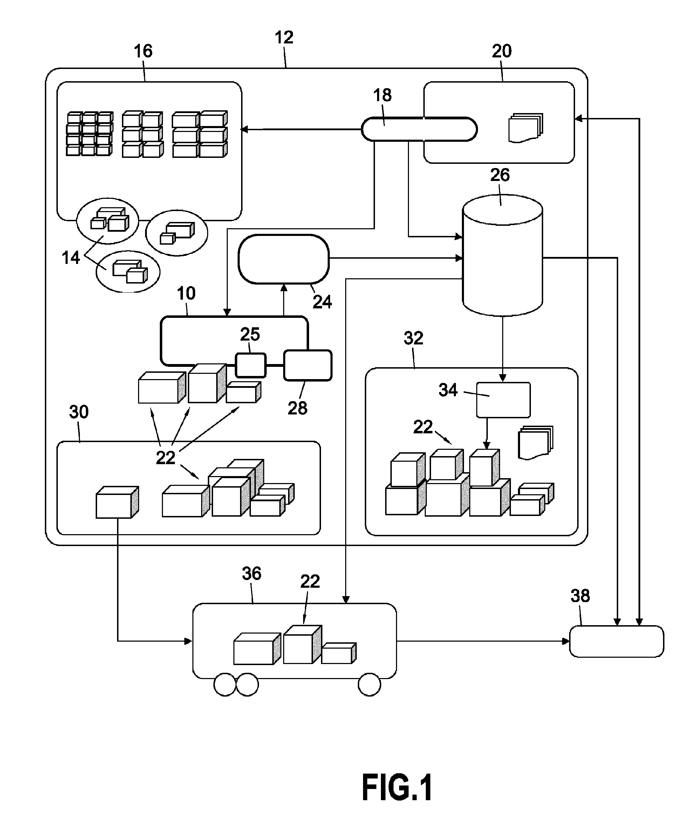

Fig. 1 is a general view of a logistic system showing various steps of the distribution process and the interactions between the parties.

A packaging device 10 of the invention is located in a distribution centre 12. Articles to be shipped 14 are gathered in a warehouse 16, according to customer orders 18 received at a management office 20. The articles 14 are then transported to the packaging device 10, packaged and sealed in a folded packaging box forming the resulting parcel 22. Dimensional and identification information 24 of the resulting parcel 22 are automatically determined during the packaging process from the overall dimensions of the articles (the weight of the resulting parcel based on articles content and packaging materials used to form and fill the packaging box or directly obtained from a weighing scale 25 can also be determined during the packaging process) and recorded in the database 26. Optionally, images of the inner content of the parcel can be recorded as well.

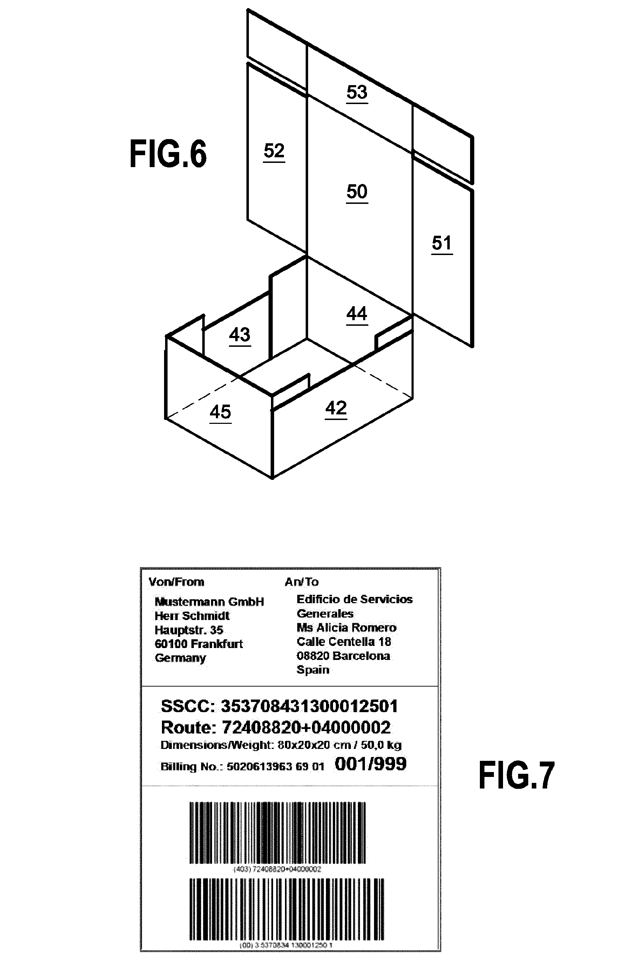

A shipping label (see figure 7 for an example) may be printed by an in-line printer 28 and affixed to the parcel 22 immediately after the packaging process. The parcel 22 can then be transported directly to a shipping floor 30. Alternatively, the parcel can be stored in a waiting floor 32 until the shipping label can be printed by an off-line printer 34. This might be the case when parcels packaged at different times are grouped together in a single shipment. Dimensional and identification information as well as service levels and delivery addresses are retrieved from the database 26 whenever the shipping label is to be printed.

The parcels 22 are then picked by a carrier 36. The information pertaining to the parcels is retrieved from the database 26 and can be used for delivery planning and invoicing, or for other verification purposes at subsequent steps of the delivery process. Indeed, a parcel 22 may be handled by various parties, both public and private, throughout its lifecycle. These parties may need to access the information pertaining to a specific parcel until it is delivered to the final recipient 38.

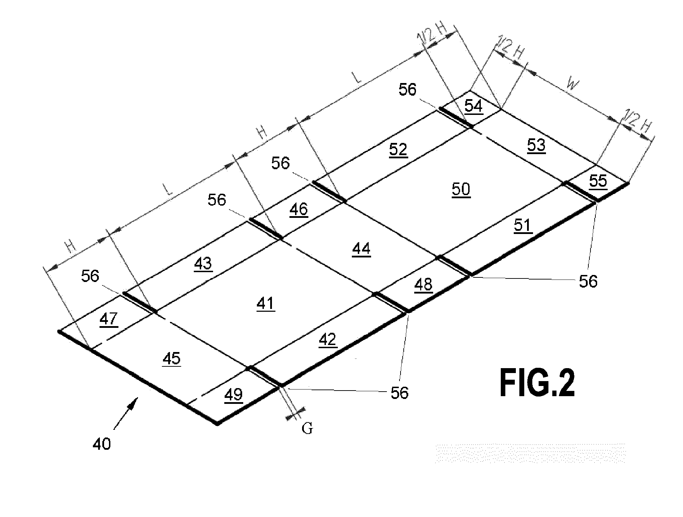

Figure 2 shows a packaging box blank 40 used in the packaging process of the invention and comprising a rectangular bottom panel 41, rectangular side panels 42, 43 and rectangular end panels 44, 45 joined to the rectangular bottom panel 41, rectangular corner panels 46, 48 joined to the rectangular end panel 44, rectangular corner panels 47, 49 joined to the rectangular end panel 45, a rectangular top panel 50 joined to the rectangular end panel 44, rectangular top side panels 51, 52 joined to the rectangular top panel 50, a rectangular top end panel 53 joined to the rectangular top panel 50 and top corner panels 54, 55 joined to the rectangular top end panel 53. As illustrated, the rectangular bottom panel 41 has a length L and a width W, the rectangular side panels 42, 43 each have a length L and a width 1/2H, the rectangular end panels 44, 45 each have a width W and a length H, the rectangular corner panels 46-49 each have a length H and a width 1/2H, the rectangular top panel 50 has a length L and a width W, the rectangular top side panels 51, 52 have a length L and a width 1/2H, the rectangular top end panel 53 has a length 1/2H and a width W, and the top corner panels 54, 55 have a width and a length of 1/2H. Cut-outs 56 are present between the respective corner panels and the adjoining side panels and have a width of 1/2H and a length G which is sufficient for allowing a correct folding of the panels with respect to one another. As can be seen the cut-outs 56 are in line with respective transverse score lines.

It can be noted that the cut-outs can be realized by taking away blank material but can also be formed by incisions in the blank material without taking away blank material. Moreover, the dimensions and the general rectangular form given above are exemplary (for this reason this rectangular mention is omitted when referring to the panels below).

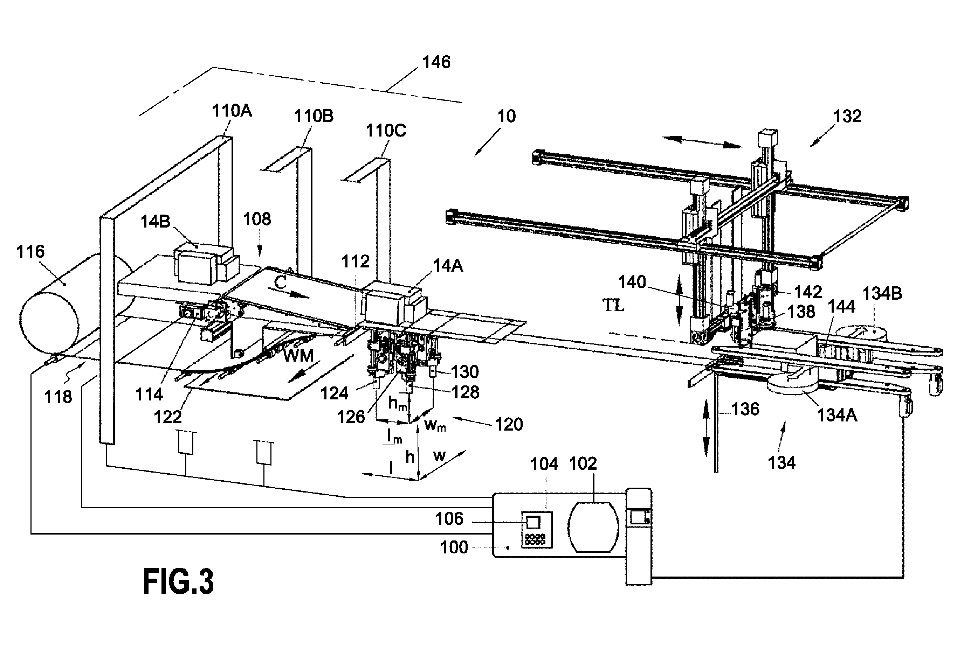

In Figure 3 a schematic side top view in perspective of the device 10 for automatically forming packaging boxes and for packaging at least one article 14A, 14B therein is shown. The device 10 includes a control unit 100 comprising a processing unit 102 for controlling the operation of the device. The control unit 100 can furthermore comprise a console 104 with control buttons e.g. for manually inputting data and a display 106.

Articles or items 14A, 14B to be packaged are substantially horizontally conveyed in conveyance direction C indicated by the arrow by an input conveyor 108, which can be realized by any known means, such as endless conveyor belts, roller conveyors, etc. The articles to be conveyed can be positioned centrally on the input conveyor and during conveyance this central position can be maintained. Sensing devices 110A-C connected to the control unit 100 are provided for determining the location, position or dimensions of the articles 14A, 14B on the input conveyor 108. Such sensing devices can be for instance a presence detector 110A in the form of light sensor device or RFID reader, a measuring device 110B and an imaging device 110C. More precisely, the measurement device 110B is communicatively connected to the control unit 100 for providing data indicative for the overall measured dimensions of the articles. In addition, data from encoders driving the input conveyor 108 can be used in determining the position of the articles. The sensing devices 110A-C optionally in combination with a weighing device (not illustrated) can determine the number of articles present on the input conveyor and provide data indicative of said number to the control unit 100. The number of articles belonging to a customer order 18 can e.g. be automatically inputted in the control unit during ordering. By counting the articles present on the input conveyor it is possible to determine whether or not the order is complete. In case one or more articles are missing then the control unit 100 can send an alarm signal to an operator and/or can deactivate the input conveyor 108 simultaneously with said alarm signal.

The control unit 100 uses the data indicative for the measured overall dimensions of the group of one or more articles to be shipped into one package to calculate minimum inner box dimensions that are required to package the article(s) to be packaged. These minimum inner box dimensions may be enlarged with a small safety margin to package the articles reliably and correctly and also such that it meets predetermined minimum packaging box dimensions that can be handled by the packaging device and depending of packaging device capabilities and limitations and packaging material characteristics, such that a parcel with a high quality appearance can be obtained.

Based on these calculated inner box dimensions the packaging box blank 40 is calculated by the control unit 100 that can be prepared by a blank forming station 112. Besides using the calculated inner box dimensions for calculating the packaging box blank the control unit 100 can also use specific information contained in the customer order 18 about the articles to be shipped such as weight and fragility and about the shipping destination and transport means for the calculation of the layout of the packaging box blank. Based on these properties it can be decided to create a potentially stronger box by letting certain panels of the box having a greater overlap at the consequence of a slightly larger box. Where for rather light articles no overlapping panels are chosen to minimize the box dimensions, it is possible for heavy or fragile articles to let the side panels of the packaging box have a certain overlap to create a stronger box, provided the dimensions of the stock material used to create the packaging box blank allows this. Also when the shipping destination is far away or expected to be under rough conditions it may be decided to go for a stronger box. On the other hand it may be decided to go for the smallest box if going for a larger box might give a significantly higher shipping tariff rate. It shall be observed that various criteria can be used in the control unit to determine the most suitable packaging box blank that best meets the packaging and shipping criteria for the customer and the one or more articles to be shipped.

The blank forming station 112 comprises a blank forming apparatus 114 for cutting and creasing blank material into the packaging box blank 40 for example from blank material which is fed out of a stock or storage 116 of default blanks. In the illustrated embodiment the blank forming apparatus 114 is positioned below the input conveyor 108, and preferably such that the conveying direction C of the articles 14A, 14B is at least substantially parallel to the feeding direction F of the blank material. Although the stock 116 of default blanks is shown in Figure 3 as a roll of endless blank material, such a stock may also be provided by zigzag folded blank material, a stack of separate default blanks or stocked otherwise. Also the blank forming apparatus 114 is communicatively connected to the control unit 100, which controls the blank forming apparatus 114 for cutting and creasing blank material into the packaging box blank 40 having a rectangular configuration at least based on the data indicative for the overall measured dimensions of the articles as provided by the measurement device 110B.

Feeding of blank material is performed by a feeding conveyor 118 which is operatively connected to the control unit 100.The feeding conveyor 118 both transports the blank material from the storage 116 to the blank forming station 112 and transports packaging box blanks 40 from the blank forming station 112 to a supporting station 120. The feeding conveyor 118 can be arranged for feeding the blank material and the packaging box blank 40 centrally positioned thereon towards the supporting station 120. The feeding conveyor 118 can e.g. be formed by superposed conveyor belts. Waste blank material remaining after formation of the packaging box blank falls down on a waste conveyor 122 and is discharged via this waste conveyor 122 preferably in a direction WM transverse to the conveying direction C.

At the supporting station 120 downstream of the input conveyor 108 four folding units 124, 126, 128, 130 are positioned. The folding units are operatively connected to the control unit 100 which is configured for activating the folding units into an operative mode. The four folding units comprise a front pair of folding units 128, 130 and a rear pair of folding units 124, 126 positioned upstream at a longitudinal distance I from the front pair of folding units 128, 130 seen in conveying direction C. In this embodiment, the folding units 128, 130 of the front pair and the folding units 124, 126 of the rear pair are positioned at the same transverse distance w from each other, which distance is adjustable under control of the control unit 100 based on the data indicative for the measured length and width dimensions, respectively. In this manner the control unit 100 can adjust the longitudinal distance and the transverse distance between the folding units 124-130 such that the folding units are able to support a respective corner of the bottom panel 41 of the packaging box blank 40. The folding units also define predetermined minimum box dimensions (Im, wm, hm) for the packaging box that can be handled by the packaging device.

A top panel folder 132 is positioned downstream of the supporting station 120, which top panel folder is operatively connected to the control unit 100. The top panel folder 132 is displaceable in height at a top folder level TL above the level defined by the bottom panel 41, which height is adjustable based on the data indicative for the measured height dimension. Furthermore, the top panel folder 132 is displaceable from and towards the supporting station 120 and in particular the control unit 100 is configured for displacing the top panel folder 132 in a direction from a sealing station 134 towards the supporting station 120 while the folding units 124-130 are displaced from the supporting station 120 towards the sealing station 134 for folding the top panel 50 of the packaging box blank into a position which is substantially parallel to the bottom panel 41. The sealing station 134 is positioned downstream of the supporting station 120 and comprises seal applicator units 134A, 134B which is operatively connected to said control unit 100 for sealing a folded packaging box.

The operation of the device 10 is also described with reference to Figure 3, in which the customer order 18 comprises three items. The items 14A are transported by the input conveyor 108. The number of articles placed on the input conveyor 108 is determined by the presence detector 110A and data indicative of said number are provided to the control unit 100. During the transport the measuring device 110B measures the overall width, length and height of all the items together and sends data indicative for these overall dimensions to the control unit 100. The imaging device 110C captures an image of the articles and send it to the control unit 100. The control unit compares the number of items present on the input conveyor 108 with the number of items belonging to the order of the customer and in case the numbers match then the control unit 100 activates the feeding conveyor 118 to transport blank material from the storage 116 and furthermore activates the blank forming apparatus 114 for cutting and creasing blank material into the packaging box blank 40 during feeding of the blank material in feeding direction F. The four folding units 124-130 are positioned at the supporting station 120 and the transverse distance w between the folding units of the front pair and rear pair is already adjusted to the measured overall width and thus also to the width W of the bottom panel 41. The longitudinal distance I between the front and rear pair is adjusted to an initial distance which can be smaller than the length L of the bottom panel as determined from the measured overall length.

During cutting and creasing blank material into the packaging box blank the feeding conveyor 118 feeds the packaging box blank 40 to the supporting station 120 such that the top end panel 53 is first transported over the folding units 124-130 and the rest of the blank follows. Based on the calculation of the layout of the packaging box blank and the feeding speed of the feeding conveyor 118 the control unit 100 drives the front folding units 128, 130 to support the blank and also transport the blank together with the feeding conveyor. The rear folding units 124, 126 remain deactivated. Thus the control unit 100 is configured for adjusting the longitudinal distance I during feeding of the blank into the supporting station 120 by starting the displacement of the front folding units earlier than the displacement of the rear folding units. Simultaneously, the control unit 100 activates the input conveyor 108 so that the items are transported in horizontal direction onto the bottom panel 41 supported at the supporting station such that the items 14A are positioned as close as possible to the folding line connecting the bottom panel 41 with the bottom end panel 44. The bottom panel 41 is fed into the supporting station 120 such that a center line of the bottom panel 41 in conveying direction is centered between the folding units of the front and rear pair and in addition the items are centrally conveyed.

During further feeding of the blank and always based on the calculation of the layout of the packaging box blank and the feeding speed of the feeding conveyor 118, the control unit 100 drives the rear folding units 124, 126 in the direction of the sealing station 134. The rear folding units 124, 126 are accelerated to a speed matching the speed of the front folding units 128, 130 until the four folding units support the respective corners of the bottom panel having a length L. In this position the front and read folding units fully support the blank and the blank is not supported or transported anymore by the feeding conveyor 108. The folding units thus not only function as a support for the blank but also as a transport means for the blank from the support station 120 to the sealing station 134. The feeding conveyor 118 which fed the blank into the supporting station 120 without interruption of the feeding movement does not transport the blank anymore.

During further displacement of the folding units supporting the packaging box blank 40 and the items 14A supported thereon in conveying direction towards the sealing station 134 the folding units are activated such that the folding flaps fold corner, side and end panels of the packaging box blank upwardly. In addition the top panel folder 132 has been activated by the control unit 100 to move in a direction towards the supporting station 120.

Based on the calculation of the layout of the packaging box blank and the transport speed of the blank the control unit 100 controls the upward movement of a top panel raiser 136 and movement of the top panel folder 132 towards the supporting station 120 to enable top panel guides 138 to engage the top panel correctly. This ensures further folding the top panel 50 over the bottom panel 41 and the items positioned thereon. The top panel folder 132 is in this embodiment linearly moveable along a rail construction. The top panel guides 138 can be mounted pivotally on the top panel folder 132. During further transport of the top panel folder in the direction of the supporting station and further displacement of the folding units towards the sealing station the top panel will be folded into a horizontal position. At this position a top pair of top folding units 140, 142 of the top panel folder 132, which top pair folding units are suspended to be displaceable with respect to one another under control of the control unit 100 for adjusting a top transverse distance there between based on the layout of the packaging box blank, are lowered to come into contact with respective corners of the top panel 50. At least substantially at the same moment that the top folding units 140, 142 make contact with the top panel the control unit reverses the movement of the top panel folder 132 such that it moves synchronously with the movement of the folding units 124-130 supporting the bottom panel and the items. Thereafter the control unit 100 activates the top folding units 140, 142 for folding down top corner panels 54, 55, top side panels 51, 52 and a top end panel 53. In addition, the control unit 100 lowers the top panel raiser 136. During further transport towards to sealing station 134 the top corner, end and side panels are completely folded downwards and the top panel raiser 136 has been completely lowered.

The sealing station 134 comprises the seal applicator units 134A, 134B which are displaceable in height and in transverse distance away from and towards each other to apply a sealing tape 144 around the box and the resulting parcel 22 is discharged via a discharge conveyor (not illustrated). The control unit 100 controls the displacement of the seal applicator units 134A, 134B based on the data indicative for the layout of the packaging box blank such that the tape is applied on the folded packaging box 22 at the correct level.

The device 10 further comprises an outside cover 146 extending in the conveying direction from the presence detector 110A to the discharge conveyor, and represented in dotted lines for convenience. This cover 146 prevents access to the moving parts of the device 10, and also to the article(s) to be packaged after these have passed the presence detector 110A. This ensures that no removal or substitution can occur after the number and/or the weight of the articles have been determined and an image thereof has been captured.

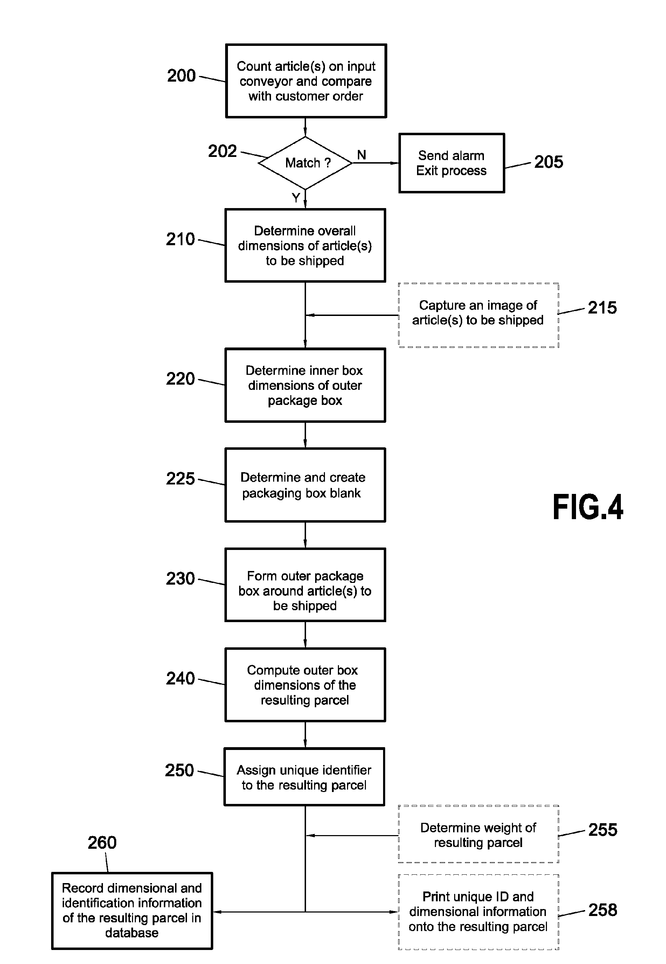

The method of the invention will now be described in view of the flowchart of Figure 4, in which the main steps of the packaging process are represented.

At step 200, the number of articles placed on the input conveyor 108 is determined and data indicative of said number are provided to the control unit 100. This step can be automated as explained above. In an alternative embodiment, an operator scans each of the articles before placing them on the input conveyor 108. This number is compared in a test step 202 with the number of articles belonging to the customer order 18, which has been transmitted by the management office 20. When these numbers match (response yes at the test 202) the process continues to the step 210. Otherwise, in case one or more articles are missing, the control unit 100 sends an alarm signal to an operator and/or deactivates the input conveyor 108 (step 205).

At step 210, the overall dimensions La, WA and Ha of the article or group of articles to be shipped are determined with the measurement device 110B during the conveying of said articles by the input conveyor 108 of the packaging device 10, and the measurement device 110B provides data indicative for these overall dimensions to the control unit 100. Alternatively, these overall dimensions can be measured or provided via automatic identification of the article(s) through for example barcode scanning, RFID detection, image recognition and/or looking up the dimensions in databases or even by operator input.

Optionally at step 215, an image of the article(s) to be shipped is captured by the imaging device 110C during the conveying of said article(s) by the input conveyor 108.

At step 220, the inner box dimensions of the packaging box to be folded are computed in the control unit 100 of the packaging device from the measured overall length, width and height dimensions. Depending on the measured overall dimensions of the article(s) to be shipped the overall dimensions are extended to the predetermined minimum packaging box dimensions that can be created by the packaging device 10 when one or more of such overall dimensions are smaller than can be created by the packaging device 10. On the contrary, when one or more of the measured overall dimensions of the article(s) are greater than said predetermined minimum packaging box dimensions, at least a few millimeters (5 to 20 mm) are added to each of these dimensions of the article(s), to compensate for measurement inaccuracies and to leave sufficient space for the packaging device 10 to reliably and safely pack the article(s) to be shipped (step 225).

At step 225, a packaging box blank is calculated by the control unit 100 based on the inner box dimensions calculated in step 220 and characteristics of the packaging material like thickness, stiffness and composition, and optionally a number of other criteria as described below. Besides taking into account the predetermined minimum box dimensions, the control unit 100 may also take into account specific characteristics of the articles being shipped 14A, like weight and fragility, and/or shipping and destination information, both which are known from the customer order 18, to create the most suitable packaging box for the articles to be shipped. For example, based on article weight or fragility, the control unit 100 may decide to create a stronger packaging box with more overlapping panels to provide a better protection for the articles to be shipped. Another criteria to create such a stronger and more protective packaging box may be the shipping destination and method, when they are expected to be under tough conditions.

The control unit may take into account various aspects of the articles to be shipped, the cardboard used to create packaging blanks, the capabilities of the packaging device and the shipping destination and transport means to come to the best suited packaging box to safely bring the articles to their destination.

At step 230, the packaging box is formed around the article(s) to be shipped. This step includes, as described here above, cutting a packaging blank from a source of blank material based on the calculated packaging box blank dimensions, placing the article or group of articles on the packaging blank, folding the packaging blank around the article(s) to create the folded packaging box and sealing the folded packaging box to create the resulting parcel 22. This step may also include supplying filling material to fill up possible empty spaces inside the box.

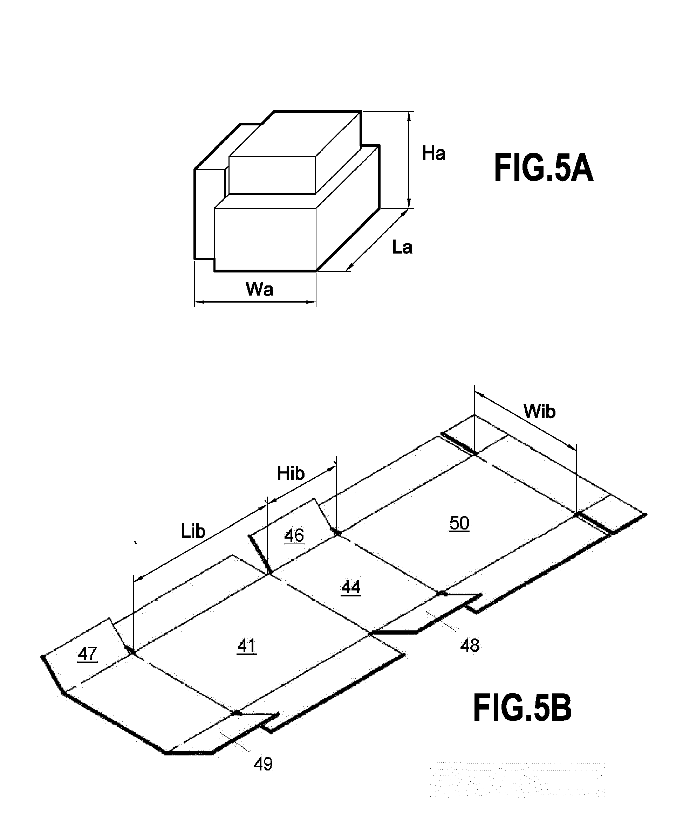

At step 240, the outer box dimensions of the resulting parcel (Lob, Wob, Hob) are computed in the control unit 100 of the packaging device from the packaging box blank. This determination takes into account the previous inner box dimensions of the packaging box (Lib, Wib, Hib), the thickness of the packaging box blank (blank material thickness CW) and the folding characteristics. The outer box dimensions may be for instance (see figures 5A-5D below for detailed features):
- Lob = Lib + 3*CW
- Wob = Wib + 6*CW
- Hob = Hib + 2*CW
Others formulas may be used depending on the folding characteristics and the layout of the packaging box after it has been cut from the blank. For example based on the weight of the articles that are to be shipped the control unit may decide to create a box with overlapping side panels, which results in a slightly larger box, where the box might fall in a higher tariff class. In such a situation the outer box dimensions might be calculated as follows (see figure 6 below for detailed features):
- Lob = Lib + 3*CW
- Wob = Wib + 8*CW
- Hob = Hib + 2*CW
With a cardboard thickness CW of 5mm the box will become 10 mm wider, which might be enough to end up in a different dimensional weight category.

Another reason that could result in increased outer box dimensions of the folded packaging box is that the length of the box is smaller than the height. In that case the corner panels that are folded inside the side panels will also overlap resulting in a slightly larger box. Because the control unit that calculated the packaging box blank dimensions knows this it may automatically increase the width dimension or the blank a bit to enable easy folding of the box panels around the articles to be shipped.

At step 250, a unique identifier is assigned to the resulting parcel 22. This identifier may be generated by the control unit of the packaging device, or may have been generated at an earlier stage of the process, for instance when the customer order 18 is received at the management office 20, or after the articles to be shipped 14 have been gathered in the warehouse 16. Optionally at step 255, the weight of the resulting parcel is determined by the control unit 100 of the packaging device. On one hand, this weight can be measured by the weighing scale 25 located at the discharge conveyor of the packaging device, or on the other hand it can be calculated from the weight of articles content and packaging materials used to form and fill the box. This step may also include verification that all articles that have been scanned at the beginning of the process are included in the resulting parcel by comparing the measured weight with the calculated weight or a predetermined weight based on customer order 18.

Optionally at step 258, the unique identifier and optionally the dimensional information (optionally including weight) are printed by the in-line printer 28 located at the discharge conveyor of the packaging device, directly onto the parcel or on a label which is subsequently affixed to the parcel.

At step 260, the dimensions of the parcel and its unique identifier are tied together, and the dimensional and identification information of the parcel are recorded in the database 26. The weight and the image of the inner content of the parcel can be added to the information.

A group of articles having overall dimensions La, Wa and Ha is shown on Figure 5A and figures 5B to 5D show views of an exemplary packaging box at various stages of folding.

As can be seen on figure 5B, the inner box dimensions Lib, Wib and Hib of the packaging box correspond to the dimensions L, W and H referred in the description of Figure 2.

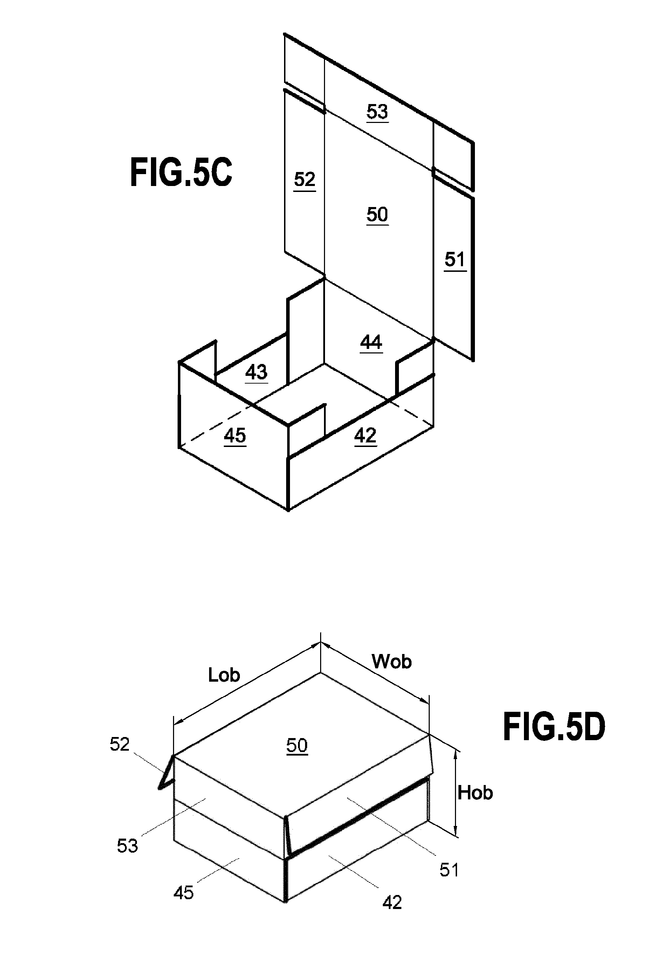

In this case and as can be seen on figure 5C, the top end panel 53 partially overlaps the rear end panel 45. The length of the resulting parcel is thus Lob = Lib + 3*CW. As can be seen in figure 5C and 5D, once folded, the top side panels 51, 52 overlap the top corner panels 55, 54 respectively, which on their turn partially overlap the corner panels 49, 47 respectively. The width of the resulting parcel is thus Wob = Wib + 6*CW. As there is no overlap on the top and bottom sides, the height of the resulting parcel is Hob = Hib + 2*CW. The outer box dimensions Lob, Wob and Hob of the resulting parcel are indicated on figure 5D.

Figure 6 shows another type of packaging box according to the invention. The outer box dimensions of the resulting parcel depend on the folding characteristics and the layout of the packaging box after it has been cut from the blank. In this case, once the packaging box is folded, the top side panels 51, 52 of the top panel 50 will partially or completely overlap the side panels 42, 43 respectively. On their turn these panels overlap the corner panels 46, 47, 48, 49, which if the length of the box is larger than the height will not overlap. The top corner panels 54, 55 are in-between the side panels and the corner panels 49, 47. The width of the resulting parcel will thus be Wob = Wib + 8*CW. This particular arrangement creates a stronger box, better protecting the contents if the tape is cut with a knife or damaged.

It may be clear for a person skilled in the art that the examples and formulas of figures 5 and 6 are not at all limitative. A different layout of the packaging box blank, created for a specific purpose, may result in different outer dimensions as well. For example if the top corner panels 54, 55 are both cut away from the blank the width of the resulting parcel will be Wob = Wib + 4*CW, provided the top side panels 51, 52 do not overlap the side panels 43, 42 respectively and the corner panels 46, 48 do not overlap the corner panels 47, 49 respectively.

Figure 7 is an example of a shipping label taken from GS1 General Specifications that can be affixed to a parcel according to the method. (GS1 is one of the two Issuing Agencies recognized by the ISO Registration Authority for automatic item identification). The label bears the unique identifier of the parcel - in this case a Serial Shipment Container Code (SSCC) such as defined by ISO/IEC 15459 - and shows in particular the outer box dimensions and the weight of the parcel, delivery address and routing information.

## Claims

1. A method for packaging articles in a packaging device (10) including the steps of: determining in a control unit (100) inner box dimensions of a packaging box from overall dimensions of an article or group of articles to be shipped (14A, 14B), preparing a packaging box blank satisfying said inner box dimensions, forming from said packaging box blank said packaging box around the article or group of articles, determining outer box dimensions of a resulting parcel (22) from said packaging box blank, assigning a unique identifier to the resulting parcel, tying said outer box dimensions of the resulting parcel to said unique identifier and recording said unique identifier and outer box dimensions in a database (26) that can be looked-up by various parties involved in the distribution of said resulting parcel.

2. The method of claim 1, wherein said overall dimensions are determined with a measuring device (110B).

3. The method of claim 1 or claim 2, wherein said inner box dimensions are at least equal to minimum packaging box dimensions that can be handled by said packaging device.

4. The method of any one of claims 1 to 3, wherein said packaging box blank is further based on predetermined properties of customer order (18), among others shipping destination, weight, fragility or shipping conditions of the article(s) to be shipped.

5. The method of any one of claims 1 to 4, wherein said outer box dimensions are determined from said inner box dimensions by the following formula:
- Lob = Lib + 3*CW
- Wob = Wib + 4*CW
- Hob = Hib + 2*CW
with Lib, Wib and Hib the inner box dimensions,
Lob, Wob and Hob the outer box dimensions, and
CW the thickness of the packaging box blank.

6. The method of any one of claims 1 to 4, wherein said outer box dimensions are determined from said inner box dimensions by the following formula:
- Lob = Lib + 3*CW
- Wob = Wib + 6*CW
- Hob = Hib + 2*CW
with Lib, Wib and Hib the inner box dimensions,
Lob, Wob and Hob the outer box dimensions, and
CW the thickness of the packaging box blank.

7. The method of any one of claims 1 to 4, wherein said outer box dimensions are determined from said inner box dimensions by the following formula:
- Lob = Lib + 3*CW
- Wob = Wib + 8*CW
- Hob = Hib + 2*CW
with Lib, Wib and Hib the inner box dimensions,
Lob, Wob and Hob the outer box dimensions, and
CW the thickness of the packaging box blank.

8. The method of claim 1, further comprising the step of capturing with an imaging device (110C) an image of the article(s) to be shipped before forming the packaging box, and recording this image in the database (26) along with the unique identifier and outer box dimensions.

9. The method of claim 1, further comprising the step of measuring with a weighing scale (25) the weight of said resulting parcel.

10. The method of claim 1, further comprising the step of calculating with the control unit (100) the weight of said resulting parcel based on articles content and packaging materials used to form and fill the packaging box.

11. The method of claim 9 and claim 10, further comprising the step of comparing said measured weight with said calculated weight or a predetermined weight based on customer order for verifying that all articles forming said group of articles are included in the resulting parcel.

12. The method of claim 1 or claim 9 or claim 10, further comprising the step of printing with an in-line printer (28) or an off-line printer (34) the unique identifier and dimensional information directly onto the resulting parcel or on a label which is subsequently affixed to the resulting parcel.
